# EUROPÄISCHE PATENTSCHRIFT

(11) **EP 2 567 935 B1**
(45) Veröffentlichungstag und Bekanntmachung des Hinweises auf die Patenterteilung: **04.06.2014**
(21) Anmeldenummer: 12177864.1
(22) Anmeldetag: 25.07.2012
(51) Int. Cl.: B67C 3/04, A23C 3/03, A23L 2/46

(54) **Verfahren und Vorrichtung zum Erhitzen eines flüssigen Produkts**
Device and method for heating a liquid product
Procédé et dispositif de chauffage d'un produit liquide

(30) Priorität: 07.09.2011 DE 102011082286
(43) Veröffentlichungstag der Anmeldung: 13.03.2013
(73) Patentinhaber: Krones AG, 93073 Neutraubling (DE)
(72) Erfinder: Richter, Volker, 95671 Regensburg (DE); Runge, Torsten, 94315 Straubing (DE); Fischer, Henri, 85462 Gaden (DE)
(74) Vertreter: Grünecker, Kinkeldey, Stockmair & Schwanhäusser

(56) Entgegenhaltungen:
- EP-A1- 2 184 257
- AT-U1- 1 418
- US-A- 4 416 194

## Beschreibung

Die Erfindung betrifft ein Verfahren und eine Vorrichtung zum Erhitzen eines flüssigen Produkts vor dessen Abfüllung.

Flüssige Produkte, wie beispielsweise Säfte und dergleichen, werden üblicherweise durch Wärmebehandlung haltbar gemacht und vorzugsweise heiß in Behälter abgefüllt. Die Wärmebehandlung ist beispielsweise eine Pasteurisierung in einer Kurzzeiterhitzungsanlage. Derartige Anlagen umfassen in der Regel einen Erhitzer zum Durchführen der Wärmebehandlung sowie eine Vorwärmeinheit, um das Produkt vor der Wärmebehandlung auf eine geeignete Eingangstemperatur vorzuwärmen, und einen Korrekturkühler, um die Produkttemperatur nach der Wärmebehandlung auf eine geeignete Abfülltemperatur abzukühlen.

Hierzu ist es beispielsweise aus der DE 29710507 U1 bekannt, Abwärme vom Produktkühlen zurück zu gewinnen und für das Erhitzen nachfließenden Produkts zu verwenden.

Aus der DE 10351689 A1 ist ferner für die Erhitzung bereits abgefüllten Produkts bekannt, Heizwasser und Kühlwasser aus einzelnen Stufen eines Flaschenkühltunnels zu sammeln und in einzelne Stufen des Flaschenkühltunnels entsprechend der jeweiligen Temperatur des für die Berieselung der Flaschen eingesetzten Wassers zurückzuführen, um auf diese Weise Wärmeenergie möglichst effizient einzusetzen.

In Kurzzeiterhitzungsanlagen können die entsprechenden Wärmemengen je nach Betriebszustand der Wärmebehandlungsanlage in den einzelnen Anlagenteilen in stark unterschiedlichen Mengen anfallen, beispielsweise beim Hochfahren, Herunterfahren, bei Abfüllunterbrechungen und dergleichen.

Für eine Produkt schonende Wärmebehandlung ist es insbesondere wünschenswert, dass die Behandlungstemperaturen in den einzelnen Behandlungsstufen möglichst gleichmäßig sind und dass das Produkt bei einem möglichst geringen Überdruck behandelt werden kann. Dieses Ziel lässt sich bei den bekannten Wärmebehandlungsanlagen mit Wärmerückgewinnung jedoch nur unzureichend realisieren.

Es besteht somit der Bedarf für in dieser Hinsicht verbesserte Verfahren zur regenerativen Kurzeiterhitzung fließender Produkte und für entsprechend optimierte Behandlungsanlagen.

Die gestellte Aufgabe wird gelöst mit einem Verfahren nach Anspruch 1 mit den folgenden Schritten: a) Vorwärmen des Produkts für das Kurzzeiterhitzen; b) Korrekturkühlen des kurzzeiterhitzten Produkts, insbesondere für dessen anschließendes Heißabfüllen; und c) Zwischenspeichern von im Schritt b) erwärmtem Kühlwasser zur Verwendung als Heizwasser für den Schritt a), wobei dem zwischengespeicherten Kühlwasser beim Kühlen abgefüllten Produkts und/oder beim Rückkühlen nicht abgefüllten Produkts gewonnene Abwärme zugeführt wird.

Durch das Zwischenspeichern lässt sich beim Kühlen des behandelten Produkts gewonnene Wärmeenergie auch bei wechselnden Betriebszuständen, insbesondere bei einem Anfahren oder Herunterfahren der Behandlungsanlage, zum Vorwärmen des Produkts einsetzen. Dadurch, dass dem zwischengespeicherten Kühlwasser in unterschiedlichen Abschnitten der Wärmebehandlungsanlage anfallende Abwärme zugeführt wird, lässt sich bei unterschiedlichen Betriebszuständen anfallende Abwärme sammeln und zeitlich mitteln. Das erfindungsgemäße Verfahren eignet sich deshalb besonders zum schonenden Kurzzeiterhitzen unterschiedlicher flüssiger Produkte, beispielsweise zur Pasteurisierung von Getränken. Außerdem lässt sich die für das Vorwärmen des Produkts insgesamt zur Verfügung stehende zurück gewonnene Wärmemenge erhöhen und sich somit der Energieverbrauch optimieren.

Vorzugsweise wird die Abwärme in Form von Wärmeaustauschwasser zugeführt, um dieses gemeinsam mit dem erwärmten Kühlwasser als Heizwasser zwischenzuspeichern. Diese Form der Wärmerückgewinnung und Zwischenspeicherung ist besonders einfach zu realisieren, da beim Zwischenspeichern zwei Wasserkreisläufe zusammengeführt werden können. Zurückgewonnene Abwärmemengen könnten aber auch über Wärmetauscher zwischen dem Heizwasser und dem Wärmeaustauschwasser übertragen werden.

Bei einer besonders günstigen Ausgestaltung wird Wärme aus beim Rückkühlen erwärmtem Kühlwasser an das Wärmeaustauschwasser übertragen. Das Kühlwasser ist somit wärmer als das Wärmeaustauschwasser. Dadurch lässt sich die zur Verfügung stehende Abwärme für das Erwärmen des Heizwassers weiter steigern.

Vorzugsweise werden die Temperaturen des vom Rückkühlen zurück laufenden Kühlwassers und des Wärmeaustauschwassers gemessen. Dadurch lasen sich die Temperaturen vergleichen und feststellen, ob ein geeigneter Temperaturübergang möglich ist.

Vorzugsweise wird die Wärmeübertragung nur zugelassen, wenn das vom Rückkühlen zurück laufenden Kühlwassers wenigstens 2°C, insbesondere wenigstens 5°C, wärmer ist als das das Wärmeaustauschwasser. Dieser Temperaturunterschied ermöglicht eine besonders effiziente Wärmerückgewinnung und vermeidet insbesondere ein unerwünschtes Abkühlen des Wärmeaustauschwassers. Besonders wirkungsvoll ist ein Temperaturunterschied von wenigstens 8°C. Grundsätzlich ist ein erfindungsgemäßer Betrieb des beschriebenen Systems möglich, sobald das Kühlwasser wärmer ist als das Wärmeaustauschwasser.

Bei einer besonders günstigen Variante wird ferner vom Vorwärmen im Schritt a) zurück laufendes Heizwasser zum Korrekturkühlen verwendet. Das Heizwasser hat dann eine zum Korrekturkühlen geeignete Temperatur, so dass ein separater Kühlkreislauf zum Korrekturkühlen entbehrlich wird.

Vorzugsweise wird die im Schritt b) korrigierte Produkttemperatur gemessen, und ein erster Anteil des vom Vorwärmen zurück laufenden Heizwassers wird in Abhängigkeit von der gemessenen Produkttemperatur als Kühlwasser im Schritt b) verwendet. Dies ist insbesondere vorteilhaft, da die erforderliche Kühlleistung in der Korrekturkühleinheit und die erforderliche Heizleistung in der Vorwärmeinheit bei laufender Wärmebehandlung näherungsweise konstant sind. Es lässt sich somit ein einfacher und stabiler Regelkreis bereitstellen.

Ein restlicher Anteil des vom Vorwärmen zurück laufenden Heizwassers wird vorzugsweise als Wärmeaustauschwasser zum Zuführen der Abwärme im Schritt c) verwendet wird. Dadurch lässt sich ein Wärmeaustauschkreislauf auf einfache Weise realisieren.

Die gestellte Aufgabe wird ferner mit einer Vorrichtung nach Anspruch 9 gelöst. Demnach umfasst diese: eine Vorwärmeinheit zum Vorwärmen des Produkts für das Erhitzen; eine Korrekturkühleinheit zum Abkühlen des kurzzeiterhitzten Produkts, insbesondere für ein anschließendes Heißabfüllen des Produkts; einen Puffertank zum Zwischenspeichern von in der Korrekturkühleinheit erwärmtem Kühlwasser; einen Heißwasserkreislauf zum Verbinden eines Ausgangs des Puffertanks mit dem Vorlauf der Vorwärmeinheit; und einen Wärmeaustauschkreislauf zum Zuführen von Abwärme aus einer Behälterkühleinheit und/oder einer Rückkühleinheit in den Puffertank.

Mit Hilfe des Puffertanks lässt sich beim Kühlen des behandelten Produkts gewonnene Wärmeenergie auch bei wechselnden Betriebszuständen, insbesondere bei einem Anfahren oder Herunterfahren der Behandlungsanlage, gleichmäßig in die Vorwärmeinheit einspeisen. Außerdem kann dem Puffertank in unterschiedlichen Abschnitten der Wärmebehandlungsanlage erwärmtes Wasser zugeführt werden. Damit lassen sich bei unterschiedlichen Betriebszuständen anfallende Wärmemengen sammeln und zeitlich mitteln. Die erfindungsgemäße Vorrichtung eignet sich deshalb besonders zum schonenden Kurzzeiterhitzen unterschiedlicher flüssiger Produkte bei reduziertem Überdruck, beispielsweise zur Pasteurisierung von Getränken.

Mit dem Wärmeaustauschkreislauf lässt sich die für das Vorwärmen des Produkts einsetzbare zurückgeführte Wärmemenge erhöhen. Die in der Behälterkühleinheit, beispielsweise einem Kühltunnel, je nach Betriebszustand unterschiedlich anfallende Wärmemenge, kann in dem Puffertank zwischengespeichert werden, so dass für das Vorwärmen eine zeitlich weitgehend konstante Wärmemenge zur Verfügung steht.

Eine besonders günstige Ausführungsform umfasst ferner mit eine Regeleinrichtung im Rücklauf der Vorwärmeinheit, um diesen anteilig mit der Korrekturkühleinheit und dem Wärmeaustauschkreislauf zu verbinden. Mit Hilfe der Regeleinrichtung lässt sich der Kühlstrom im Vorlauf der Korrekturkühleinheit einstellen, um nach der Korrekturkühleinheit eine konstante Produkttemperatur zu erzielen. Ein zusätzlicher Anteil des von der Vorwärmeinheit rücklaufenden Wassers kann der Behälterkühleinheit zugeführt werden. Ein derartiger Regelkreis lässt sich insbesondere deshalb auf einfache Weise realisieren, da die an der Korrekturkühleinheit anfallende Abwärmemenge während der Behandlung einer Produktcharge zeitlich weitgehend konstant ist. Ebenso ist die für das Vorwärmen des Produkts benötigte Wärmemenge weitgehend unabhängig vom Betriebszustand der Behandlungsanlage näherungsweise konstant.

Vorzugsweise ist ferner eine Wärmeaustauschleitung vorgesehen, um Abwärme aus dem Rücklauf einer Rückkühleinheit an den Wärmeaustauschkreislauf zu übertragen, insbesondere mit Hilfe eines Wärmetauschers.

Dadurch lässt sich die rückführbare Wärmemenge zusätzlich erhöhen. Somit lässt sich Wärme insbesondere bei einem Betriebszustand, in dem das Produkt nicht abgefüllt wird, zurückgewinnen. Dies ist insbesondere in Kombination mit einer Wärmerückgewinnung aus einer Behälterkühlanlage vorteilhaft, da dann sowohl in einem Betriebszustand, in dem das Produkt abgefüllt wird, als auch in einem Betriebszustand, in dem kein Produkt abgefüllt wird, Abwärme zur Rückgewinnung für das Vorwärmen zur Verfügung steht. Somit lässt sich Abwärme besonders gleichmäßig in den Puffertank einspeisen.

Mit einem Wärmetauscher lässt sich die Wärme aus der Wärmeaustauschleitung auch in dem Fall einspeisen, in dem die Wärmeaustauschleitung selbst nicht Bestandteil des Heißwasserkreislaufs oder Wärmeaustauschkreislaufs sein kann, beispielsweise aus hygienischen Gründen. Der Wärmetauscher könnte alternativ auch an dem Puffertank vorgesehen sein, um die Wärme aus der Wärmeaustauschleitung direkt in diesen einzuspeisen.

Vorzugsweise ist der Durchfluss durch die Wärmeaustauschleitung regelbar, insbesondere in Abhängigkeit von einem Temperaturunterschied zum Wärmeaustauschkreislauf. Eine Regeleinrichtung im Rücklauf der Rückkühleinheit ermöglicht hierbei ein dosiertes Einspeisen der Wärme, je nach Verfügbarkeit von Abwärme und Bedarf. Zu diesem Zweck kann eine Vergleichseinrichtung zum Vergleich der Wassertemperatur in der Wärmeaustauschleitung und im Wärmeaustauschkreis vorgesehen sein. Dadurch kann sichergestellt werden, dass eine Wärmeübertragung nur dann stattfindet, wenn die Wassertemperatur in der Wärmeaustauschleitung um ein vorgegebenes Maß über der Wassertemperatur des Wärmeaustauschkreises liegt. Insbesondere kann damit verhindert werden, dass das Wasser in dem Wärmeaustauschkreis durch die Wärmeaustauschleitung gekühlt wird.

Eine besonders günstige Ausführungsform umfasst eine wasserseitig wenigstens zweistufige Rückkühleinheit, um dem Puffertank Abwärme aus der heißesten, insbesondere ausschließlich aus der heißesten, Stufe der Rückkühleinheit zuzuführen. Dadurch lässt sich ein gewünschtes, möglichst hohes Temperaturniveau in der Wärmeaustauschleitung bereitstellen. Damit lässt sich insbesondere eine Wassertemperatur in der Wärmeaustauschleitung erzielen, die höher ist als die Wassertemperatur in dem Wärmeaustauschkreislauf.

Bei einer weiteren günstigen Ausführungsform der erfindungsgemäßen Vorrichtung ist ferner wenigstens eine weitere Wärmeaustauschleitung vorgesehen, um dem Puffertank Abwärme aus einer Einheit zum Reinigen von Behältern und/oder einem Sudhaus zuzuführen. Dadurch lässt sich der Anteil an zurückgeführter Abwärme für das Vorwärmen des Produkts weiter erhöhen. Durch das Anschließen weiterer Wärmequellen kann außerdem eine noch gleichmäßigere Wärmezufuhr in den Puffertank realisiert werden. Hierzu können in den jeweiligen Wärmeaustauschleitungen geeignete Regeleinrichtungen zum Regeln des Wärmestroms vorgesehen sein.

Vorzugsweise ist an dem Puffertank eine Reinigungsöffnung, beispielsweise ein Abwasserablauf, vorgesehen. Dadurch lässt sich der Puffertank, und mit ihm der angeschlossene Heißwasserkreislauf auf einfache Weise reinigen.

Eine bevorzugte Ausführungsform der Erfindung ist in der Zeichnung dargestellt. Es zeigen:
Fig. 1 ein schematisches Rohrleitungs- und Instrumentenfließbild einer bevorzugten Ausführungsform; und
Fig. 2 einen Ausschnitt aus dem Fließbild der Fig. 1, bei einer Variante mit einer zweistufigen Rückkühleinheit.

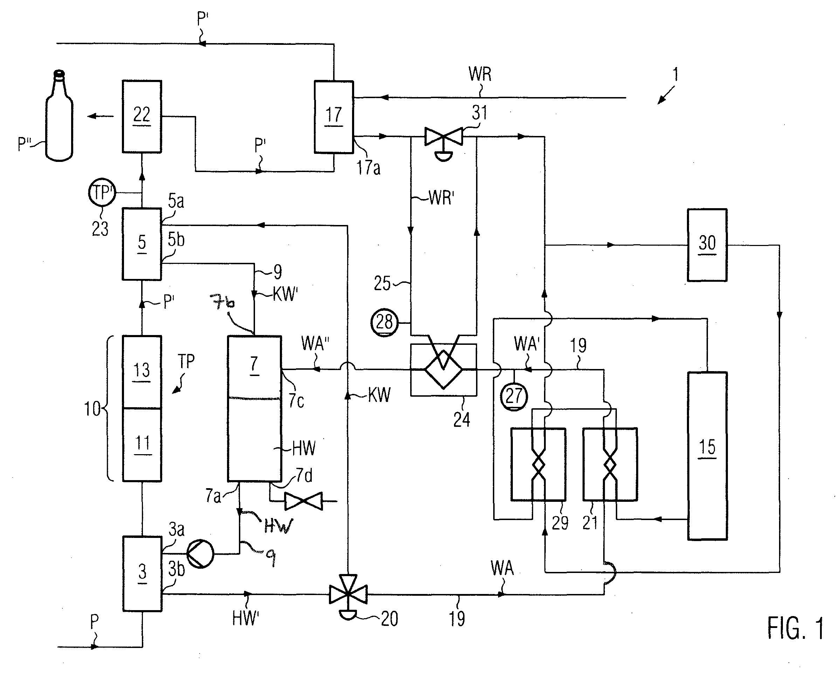

Wie die Fig. 1 erkennen lässt, umfasst eine bevorzugte Ausführungsform 1 der erfindungsgemäßen Vorrichtung zum Kurzzeiterhitzen eines flüssigen Produkts P, wie beispielsweise eines Getränks, eine Vorwärmeinheit 3 zum Vorwärmen des Produkts P für eine unmittelbar nachfolgende Kurzzeiterhitzung, eine Korrekturkühleinheit 5 zum Einstellen einer Produkttemperatur TP' des zuvor kurzzeiterhitzten Produkts P', insbesondere für ein anschließendes Heißabfüllen des behandelten Produkts P', und einen Puffertank 7 zum Zwischenspeichern von Heizwasser HW für die Vorwärmeinheit 3.

Es ist ferner ein Heißwasserkreislauf 9 vorgesehen, in dem das Heizwasser HW von einem Ausgang 7a des Puffertanks 7 zum Vorlauf 3a der Vorwärmeinheit 3 gefördert wird. Ein erster Anteil des aus dem Rücklauf 3b der Vorwärmeinheit 3 zurück fließenden abgekühlten Heizwassers HW' wird als Kühlwasser KW zum Vorlauf 5a der Korrekturkühleinheit 5 geleitet. Das beim Korrekturkühlen erwärmte Kühlwasser KW' fließt aus dem Rücklauf 5b der Korrekturkühleinheit 5 zu einem ersten Eingang 7b des Puffertanks 7, um dort als ein erster Anteil des Heizwassers HW zwischengespeichert zu werden.

Zwischen der Vorwärmeinheit 3 und der Korrekturkühleinheit 5 ist produktseitig in bekannter Weise eine Behandlungseinheit 10 zum Kurzzeiterhitzen, beispielsweise zur Pasteurisierung, des Produkts P vorgesehen, beispielsweise umfassend einen Erhitzer 11 und eine Heißhalteeinheit 13. Die Vorwärmeinheit 3, der Erhitzer 11 und die Korrekturkühleinheit 5 werden beispielsweise durch Wärmetauscher bekannter Bauart ausgebildet. Die Heißhalteeinheit 13 umfasst beispielsweise eine Rohrstrecke oder ein Rohrsystem bekannter Bauart.

Das aus dem Puffertank 7 anströmende Heizwasser HW wird je nach Bedarf durch einen (nicht dargestellten) Wärmetauscher beispielsweise mittels Dampf zusätzlich erwärmt. Auch der Erhitzer 11 kann in bekannter Weise mit Dampf beheizt werden (nicht dargestellt).

Das Heizwasser HW und damit die Vorwärmeinheit 3 werden je nach Verfügbarkeit durch zurück gewonnene Abwärme aus der Korrekturkühleinheit 5 und vorzugsweise auch mit Abwärme zusätzlicher Kühleinheiten erwärmt. Diese können, wie in der Fig. 1 beispielhaft gezeigt ist, eine Behälterkühleinheit 15 zum Kühlen des abgefüllten Produkts P" umfassen sowie eine Rückkühleinheit 17 zum Kühlen kurzzeiterhitzten, aber noch nicht abgefüllten Produkts P' für dessen Rückführung in eine Medienverteilungseinheit (nicht dargstellt) oder dergleichen.

Zur Wärmerückgewinnung von der Behälterkühleinheit 15 ist ein Wärmeaustauschkreislauf 19 vorgesehen, der von dem Heißwasserkreislauf 9 an einer Regeleinrichtung 20, beispielsweise einer verstellbaren Klappe, zum Aufteilen des in der Vorwärmeinheit 3 abgekühlten Heizwassers HW' abzweigt. Von dort führt der Wärmeaustauschkreislauf 19 einen zweiten Anteil des zurücklaufenden Heizwassers HW' als Wärmeaustauschwasser WA zu einem Wärmetauscher 21 im Bereich der Behälterkühleinheit 15 und weiter zu einem zweiten Eingang 7c des Puffertanks 7. Mit Hilfe des Wärmetauschers 21 kann somit beim Abkühlen abgefüllter Behälter gewonnene Abwärme an den Wärmeaustauschkreislauf 19 übertragen und das auf diese Weise erwärmte Wärmeaustauschwasser WA' anschließend in dem Puffertank 7 zwischengespeichert werden.

Während die an der Behälterkühleinheit 15 zur Verfügung stehende Abwärme vom Betriebszustand einer lediglich schematisch angedeuteten Fülleinheit 22 zum Abfüllen des Produkts P' in Behälter abhängig ist, steht an der Korrekturkühleinheit 5 im laufenden Betrieb eine im Wesentlichen zeitlich konstante Abwärmemenge zur Verfügung, die dem Puffertank 7 kontinuierlich mit dem erwärmten Kühlwasser KW' zugeführt werden kann. Somit lässt sich mit Hilfe des Puffertanks 7 Abwärme aus unterschiedlichen Kühleinheiten sammeln und zeitlich mitteln, um auch bei unregelmäßigen oder schwankenden Betriebszuständen einzelner Behandlungseinheiten einen geeigneten zurückgeführten Wärmestrom im Vorlauf 3a der Vorwärmeinheit 3 bereit zu stellen.

In Abhängigkeit von der hinter der Korrekturkühleinheit 5 mittels einer Temperaturmesseinrichtung 23 gemessenen Produkttemperatur TP' stellt die Regeleinrichtung 20 einen ersten Anteil des aus der Vorwärmeinheit 3 zurückfließenden Wassers HW' als Kühlwasser KW für die Korrekturkühleinheit 5 zur Verfügung. Der nicht für die Korrekturkühlung eingesetzte verbleibende Anteil des aus der Vorwärmeinheit 3 zurückfließenden Wassers HW' wird in den Wärmeaustauschkreislauf 19 als Wärmeaustauschwasser WA eingespeist. Somit lassen sich die für das Vorwärmen benötigten Wärmemengen und die beim Korrekturkühlen abzuführenden Wärmemengen unter Einbeziehung des Puffertanks 7 an einen kontinuierlichen Strom des zu behandelnden Produkts P exakt anpassen und gleichzeitig überschüssige und/oder wechselnde Wärmemengen aus wärmebehandeltem Produkt zurückgewinnen und zu einem geeigneten Zeitpunkt für die Wärmebehandlung nachfließenden Produkts nutzen. Durch die Zwischenspeicherung im Puffertank 7 wird eine besonders gleichmäßige und Produkt schonende Kurzzeiterhitzung bei geringem Energieeinsatz und geringem Überdruck ermöglicht.

Wie die Fig. 1 ferner zeigt, ist in dem Wärmeaustauschkreislauf 19 vorzugsweise ein weiterer Wärmetauscher 24 vorgesehen, um das im Bereich der Behälterkühleinheit 15 erwärmte und in Richtung des Puffertanks 7 zurück laufende Wärmeaustauschwasser WA' zusätzlich zu erwärmen. Man erhält dann ensprechend heißeres Wärmeaustauschwasser WA" am Eingang 7c des Puffertanks 7. Dafür zur Verfügung stehende Abwärme wird dem Wärmetauscher 24 von wenigstens einer weiteren Produktkühleinheit, wie beispielsweise der Rückkühleinheit 17 zugeführt. Hierzu ist eine Wärmeaustauschleitung 25 vorgesehen, die im gezeigten Beispiel einen Rücklauf 17a der Rückkühleinheit 17 mit dem Wärmetauscher 24 verbindet.

In dem Wärmeaustauschkreislauf 19 und der Wärmeaustauschleitung 25 sind jeweils vor dem Wärmetauscher 24 Temperaturmesseinrichtungen 27, 28 vorgesehen, um die Wassertemperatur im Wärmeaustauschkreislauf 19 und in der Wärmeaustauschleitung 25 zu messen und zu vergleichen. Dadurch wird sichergestellt, dass ein Wärmeaustausch in dem Wärmeaustauscher 24 nur dann erfolgt, wenn die Wassertemperatur in der Wärmeaustauschleitung 25 um einen vorgegebenen Betrag höher liegt als die Temperatur in dem Wärmeaustauschkreislauf 19. Ein geeigneter Temperaturunterschied ist beispielsweise wenigstens 5°C oder insbesondere wenigstens 10°C.

Anders gesagt, erfolgt ein Wärmeaustausch in dem Wärmetauscher 24 nur dann, wenn an der Rückkühleinheit 17 eine geeignete Abwärmemenge zur Verfügung steht. Im Gegensatz zur Korrekturkühleinheit 5 fällt die Abwärme an der Rückkühleinheit 17 im laufenden Betrieb in der Regel diskontinuierlich an. Jedoch ermöglicht auch hier die Zwischenspeicherung im Puffertank 7 eine effiziente Nutzung der nur zeitweise anfallenden Abwärme aus der Rückkühleinheit 17. Somit ermöglicht der Puffertank 7 generell die Kombination kontinuierlich anfallender Abwärmemengen, wie beispielsweise aus der Korrekturkühleinheit 5, mit unter Umständen unregelmäßig anfallenden Abwärmemengen, wie beispielsweise aus erwärmtem Kühlwasser WR' der Rückkühleinheit 17 und/oder der Behälterkühleinheit 15.

Der Vollständigkeit halber sind in der Fig. 1 noch ein Wärmetauscher 29 mit zugehörigem Kühlturm 30 im Bereich der Behälterkühleinheit 15 angedeutet.

Ebenso ist eine Reinigungsöffnung 7d des Pufferbehälters 7 angedeutet, durch den eine Reinigung des Pufferbehälters 7 und der daran angeschlossenen Wasserkreisläufe ermöglicht wird.

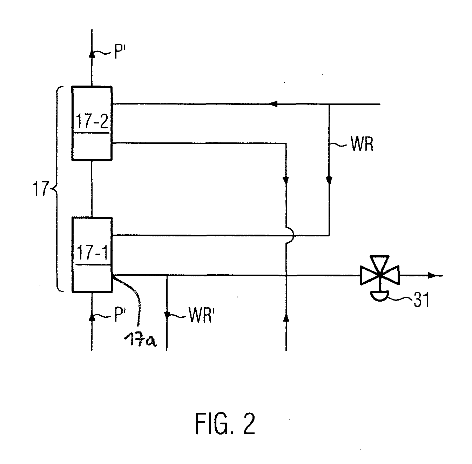

Wie die Fig. 2 verdeutlicht, ist die Rückkühleinheit 17 vorzugsweise wenigstens zweistufig ausgebildet, um die Wärmeaustauschleitung 25 mit der eingangsseitig ersten Stufe 17-1 zu verbinden und somit in dieser ein möglichst hohes Temperaturniveau sicherzustellen. Dadurch soll ein möglichst effektiver Wärmeübergang von der Rückkühleinheit 17 an den Wärmeaustauschkreislauf 19 und in den Puffertank 7 ermöglicht werden. In der Fig. 2 ist lediglich eine zweite Kühlstufe 17-2 angedeutet. Für das erfindungsgemäße Verfahren ist die Anzahl der nachfolgenden Kühlstufen jedoch insofern unwesentlich, als lediglich ein geeignetes Temperaturniveau im Rücklauf 17a der ersten Stufe 17-1 bereitgestellt werden muss.

Im Rücklauf 17a der Rückkühleinheit 17 ist vorzugsweise eine weitere Regeleinrichtung 31 vorgesehen, um bei verfügbarer Abwärme in der Rückkühleinheit 17 geeignet erwärmtes Kühlwasser WR' zum Wärmetauscher 24 zu leiten. Alternativ leitet die Regeleinrichtung 31 aus der Rückkühleinheit 17 zurücklaufendes Kühlwasser WR' zum Kühlturm 30. Entscheidend bei der in der Fig. 2 dargestellten bevorzugten Ausführungsform der Rückkühleinheit 17 ist, dass das Kühlwasser WR auf ein möglichst hohes und somit zur Erwärmung im Wärmeaustauschkreislauf 19 geeignetes Temperaturniveau gebracht wird und als zusätzliche, mittels des Puffertanks 7 gepufferte Wärmequelle für das Vorwärmen des Produkts P zur Verfügung steht.

Mit der erfindungsgemäßen Vorrichtung kann wie folgt gearbeitet werden:

Das thermisch zu behandelnde und abzufüllende Produkt P wird kontinuierlich der Vorwärmeinheit 3 zugeführt und von dieser auf eine geeignete Temperatur zum nachfolgenden Kurzzeiterhitzen gebracht. Das vorgewärmte Produkt wird in dem Erhitzer 11 auf die gewünschte Behandlungstemperatur TP erhitzt und in der anschließenden Heißhalteeinheit 13 für eine vorgegebene Behandlungszeit auf der gewünschten Behandlungstemperatur TP gehalten. Die Behandlungsdauer wird hierbei im Wesentlichen durch die Strömungsgeschwindigkeit des Produkts P und die Länge der durchströmten Rohrstrecke der Heißhalteeinheit 13 bestimmt. Die Kurzzeiterhitzung mit Hilfe des Erhitzers 11 und der Heißhalteeinheit 13 kann somit in bekannter Weise erfolgen. Das derart behandelte Produkt P' wird der Korrekturkühleinheit 5 zugeführt. In dieser wird das Produkt auf die gewünschte Abfülltemperatur TP' abgekühlt.

Hierbei erfolgt das Vorwärmen, Erhitzen, Heißhalten und Abkühlen auf die Abfülltemperatur TP' in einem kontinuierlichen Produktstrom, so dass die Wärmemengen für das Vorwärmen, das Erhitzen und die Abwärmemenge beim Korrekturkühlen im laufenden Betrieb im Wesentlichen gleichbleibend sind. Die Regelung erfolgt hierbei im Wesentlichen in Abhängigkeit von der nach der Korrekturkühlung gemessenen Produkttemperatur TP' vor dem Abfüllen. Das heißt, die beim Wärmeaustausch für das Erwärmen und Abkühlen jeweils ausgetauschten Wärmemengen werden in Abhängigkeit von der Behandlungstemperatur TP, der Behandlungsdauer und der Abfülltemperatur TP' eingestellt. Mit Hilfe der Regeleinrichtung 20 wird der Wärmeaustausch im Heißwasserkreislauf 9 für einen kontinuierlichen Produktstrom stabilisiert und zu diesem Zweck nicht benötigtes zurücklaufendes Kühlwasser HW' in den Wärmeaustauschkreislauf 19 eingespeist.

Je nach Betriebszustand können unterschiedliche Abwärmemengen in der Behälterkühleinheit 15 anfallen. Beispielsweise werden beim Hochfahren der Kurzzeiterhitzungsanlage noch keine befüllten Behälter gekühlt, so dass in der Behälterkühleinheit 15 zunächst keine Abwärme zum Einleiten in den Heißwasserkreislauf 9 zur Verfügung gestellt werden kann. Ebenso kann beim Herunterfahren der Behandlungsanlage noch Abwärme in der Behälterkühleinheit 15 anfallen, während bereits die gesamte Produktcharge wärmebehandelt wurde, so dass zu diesem Zeitpunkt keine Vorwärmung in der Vorwärmeinheit 3 mehr benötigt wird. In beiden Fällen ermöglicht der Puffertank 7 einen zeitlichen Ausgleich der zur Verfügung gestellten Wärmemenge in dem Heißwasserkreislauf 9 der Vorwärmeinheit 3.

Ebenso kann das Produkt P' bei einem Stillstand der Fülleinheit 22 mit Hilfe der Rückkühleinheit 17 auf ein vorgegebenes Temperaturniveau abgekühlt und somit im Kreislauf gefahren werden. In diesem Fall fällt an der Rückkühleinheit 17 Abwärme an, die erfindungsgemäß in den Puffertank 7 und somit in den Heißwasserkreislauf 9 eingespeist werden kann. Somit lässt sich auch bei einer nur kurzeitigen Verfügbarkeit von Abwärme in der Rückkühleinheit 17 im Wesentlichen unabhängig von dem Betriebszustand Abwärme zurückgewinnen und für das Vorwärmen nachströmenden Produkts P nutzen.

An dem gezeigten Heißwasserkreislauf 9 könnten mit Hilfe geeigneter Wärmetauscher und Zuleitungen weitere Abwärmequellen mittels des Puffertanks 7 angeschlossen werden. Dem Heizwasser HW kann zusätzlich Abwärme aus anderen Anlagenbereichen zugeführt und zwischengespeichert werden, beispielsweise aus einem Sudhaus und/oder einer Reinigungsanlage für Behälter. Somit ermöglicht insbesondere der Puffertank 7 eine flexible Anbindung unterschiedlicher Abwärmequellen an den Heißwasserkreislauf 9 der Kurzzeiterhitzungsanlage 1. Es können somit auch Abwärmequellen aus anderen Produktionsbereichen eingebunden werden.

Es wäre auch denkbar, getrennte Puffertanks für einzelne Abwärmequellen vorzusehen und das Heizwasser HW außerhalb des Puffertanks 7 zu mischen. Ebenso könnten zusätzliche Wärmetauscher vorgesehen sein, um beispielsweise den Heißwasserkreislauf von Wärmeaustauschkreisläufen zu trennen, solange eine Erwärmung des Heizwassers HW für die Produktvorwärmung aus unterschiedlichen Abwärmequellen möglich ist. Die gezeigte Ausführungsform ist jedoch besonders einfach und zuverlässig zu realisieren.

## Patentansprüche

1. Verfahren zum Kurzzeiterhitzen eines flüssigen Produkts (P) vor dessen Abfüllung, mit den Schritten:
a) Vorwärmen des Produkts (P) für das Kurzzeiterhitzen;
b) Korrekturkühlen des kurzzeiterhitzten Produkts (P'), insbesondere für dessen anschließendes Heißabfüllen; und
c) Zwischenspeichern von im Schritt b) erwärmtem Kühlwasser (KW') zur Verwendung als Heizwasser (HW) für den Schritt a), wobei dem zwischengespeicherten Kühlwasser (KW') beim Kühlen abgefüllten Produkts (P") und/oder beim Rückkühlen nicht abgefüllten Produkts (P') gewonnene Abwärme zugeführt wird.

2. Verfahren nach Anspruch 1, wobei die Abwärme in Form von Wärmeaustauschwasser (WA', WA") zugeführt wird, um dieses gemeinsam mit dem erwärmten Kühlwasser (KW') als Heizwasser (HW) zwischenzuspeichern.

3. Verfahren nach Anspruch 2, wobei Wärme aus beim Rückkühlen erwärmtem Kühlwasser (WR') an das Wärmeaustauschwasser (WA') übertragen wird.

4. Verfahren nach Anspruch 3, wobei die Temperaturen des vom Rückkühlen zurück laufenden Kühlwassers (WR') und des Wärmeaustauschwassers (WA') gemessen werden.

5. Verfahren nach Anspruch 4, wobei die Wärmeübertragung an das Wärmeaustauschwasser (WA') nur zugelassen wird, wenn das vom Rückkühlen zurück laufenden Kühlwassers (WR') wenigstens 2°C, insbesondere wenigstens 5°C, wärmer ist als das Wärmeaustauschwasser (WA').

6. Verfahren nach wenigstens einem der vorigen Ansprüche, wobei ferner vom Vorwärmen im Schritt a) zurück laufendes Heizwasser (HW') zum Korrekturkühlen verwendet wird.

7. Verfahren nach Anspruch 6, wobei die im Schritt b) korrigierte Produkttemperatur (TP") gemessen wird und ein erster Anteil des vom Vorwärmen zurück laufenden Heizwassers (HW') in Abhängigkeit von der gemessenen Produkttemperatur (TP') als Kühlwasser (KW) im Schritt b) verwendet wird.

8. Verfahren nach Anspruch 7, wobei ein restlicher Anteil des vom Vorwärmen zurück laufenden Heizwassers (HW') als Wärmeaustauschwasser (WA) zum Zuführen der Abwärme im Schritt c) verwendet wird.

9. Vorrichtung zum Kurzzeiterhitzen eines flüssigen Produkts vor dessen Abfüllung, mit:
- einer Vorwärmeinheit (3) zum Vorwärmen des Produkts (P) für das Erhitzen;
- einer Korrekturkühleinheit (5) zum Abkühlen des kurzzeiterhitzten Produkts (P'), insbesondere für ein anschließendes Heißabfüllen des Produkts;
- einem Puffertank (7) zum Zwischenspeichern von in der Korrekturkühleinheit erwärmten Kühlwasser;
- einem Heißwasserkreislauf (9) zum Verbinden eines Ausgangs (7a) des Puffertanks mit dem Vorlauf (3a) der Vorwärmeinheit; und
- einem Wärmeaustauschkreislauf (19) zum Zuführen von Abwärme aus einer Behälterkühleinheit (15) und/oder einer Rückkühleinheit (17) in den Puffertank.

10. Vorrichtung nach Anspruch 9, ferner mit einer Regeleinrichtung (20) im Rücklauf (3b) der Vorwärmeinheit (3), um diesen anteilig mit der Korrekturkühleinheit (5) und dem Wärmeaustauschkreislauf (19) zu verbinden.

11. Vorrichtung nach Anspruch 9 oder 10, ferner mit einer Wärmeaustauschleitung (25), um Abwärme aus dem Rücklauf (17a) einer Rückkühleinheit (17) an den Wärmeaustauschkreislauf (19) zu übertragen, insbesondere mit Hilfe eines Wärmetauschers (24).

12. Vorrichtung nach Anspruch 11, wobei der Durchfluss durch die Wärmeaustauschleitung (25) regelbar ist, insbesondere in Abhängigkeit von einem Temperaturunterschied zum Wärmeaustauschkreislauf (19).

13. Vorrichtung nach wenigstens einem der Ansprüche 9 bis 12, ferner mit einer wasserseitig wenigstens zweistufigen Rückkühleinheit (17), um dem Puffertank Abwärme aus der heißesten, insbesondere ausschließlich aus der heißesten, Stufe (17-1) der Rückkühleinheit zuzuführen.

14. Vorrichtung nach wenigstens einem der Ansprüche 9 bis 13, ferner mit wenigstens einer weiteren Wärmeaustauschleitung, um dem Puffertank (7) Abwärme aus einer Einheit zum Reinigen von Behältern und/oder einem Sudhaus zuzuführen.

15. Vorrichtung nach wenigstens einem der Ansprüche 9 bis 14, wobei an dem Puffertank (7) eine Reinigungsöffnung (7d) vorgesehen ist.

## Claims

1. Method of flash pasteurizing a liquid product (P) before it is filled, comprising the steps of:
a) preheating the product (P) for flash pasteurization;
b) correction cooling the flash pasteurized product (P'), in particular for subsequently hot-filling the same; and
c) intermediately storing cooling water (KW') heated in step b) to be used as heating water (HW) for step a), wherein waste heat obtained during the cooling of filled-in product (P") and/or recooling of not filled-in product (P') is supplied to the intermediately stored cooling water (KW').

2. Method according to claim 1, wherein the waste heat is supplied in the form of heat transfer water (WA', WA") to intermediately store the latter together with the heated cooling water (KW') a heating water (HW).

3. Method according to claim 2, wherein heat from recooling heated cooling water (WR') is transferred to the heat transfer water (WA').

4. Method according to claim 3, wherein the temperatures of the cooling water (WR') flowing back from recooling and of the heat transfer water (WA') are measured.

5. Method according to claim 4, wherein the heat transfer to the heat transfer water (WA') is only permitted if the cooling water (WR') flowing back from recooling is warmer than the heat transfer water (WA') by at least 2 °C, in particular at least 5 °C.

6. Method according to at least one of the preceding claims, wherein furthermore heating water (HW') flowing back from preheating in step a) is used for correction cooling.

7. Method according to claim 6, wherein the product temperature (TP") corrected in step b) is measured, and a first proportion of the heating water (HW') flowing back from preheating is used as cooling water (KW) in step b) depending on the measured product temperature (TP').

8. Method according to claim 7, wherein a remaining proportion of the heating water (HW') flowing back from preheating is used as heat transfer water (WA) for supplying the waste heat in step c).

9. Device for flash pasteurizing a liquid product before it is filled, having:
- a preheating unit (3) for preheating the product (P) for heating;
- a correction cooling unit (5) for cooling the flash pasteurized product (P'), in particular for subsequently hot filling the product;
- a buffer tank (7) for intermediately storing cooling water heated in the correction cooling unit;
- a hot water cycle (9) for connecting an outlet (7a) of the buffer tank with the flow line (3a) of the preheating unit; and
- a heat transfer cycle (19) for supplying waste heat from a container cooling unit (15) and/or a recooling unit (17) into the buffer tank.

10. Device according to claim 9, further having a controlling device (20) in the return line (3b) of the preheating unit (3) to connect it partially with the correction cooling unit (5) and the heat transfer cycle (19).

11. Device according to claim 9 or 10, further having a heat transfer line (25) to transfer waste heat from the return line (17a) of a recooling unit (17) to the heat transfer cycle (19), in particular with the aid of a heat exchanger (24).

12. Device according to claim 11, wherein the flow through the heat transfer line (25) is controllable, in particular depending on a temperature difference to the heat transfer cycle (19).

13. Device according to at least one of claims 9 to 12, further having a recooling unit (17) with at least two stages on the water side for supplying the buffer tank with waste heat from the hottest, in particular exclusively from the hottest stage (17-1) of the recooling unit.

14. Device according to at least one of claims 9 to 13, further having at least one further heat transfer line for supplying the buffer tank (7) with waste heat from a unit for cleaning containers and/or a brewhouse.

15. Device according to at least one of claims 9 to 14, wherein a cleaning port (7d) is provided at the buffer tank (7).

## Revendications

1. Procédé de chauffage de courte durée d'un produit liquide (P) avant son conditionnement par remplissage, comprenant les étapes :
a) préchauffage du produit (P) en vue du chauffage de courte durée ;
b) refroidissement de correction du produit ayant subi le chauffage de courte durée (P'), notamment pour son conditionnement à chaud par remplissage, qui suit ; et
c) stockage intermédiaire d'eau de refroidissement (KW') ayant été échauffée au cours de l'étape b), pour être utilisée en tant qu'eau de chauffage (HW) pour l'étape a), de la chaleur perdue produite lors du refroidissement de produit conditionné par remplissage (P") et/ou lors du refroidissement de recyclage de produit non conditionné par remplissage (P'), étant transmise à l'eau de refroidissement de stockage intermédiaire (KW').

2. Procédé selon la revendication 1, d'après lequel la chaleur perdue est amenée sous la forme d'eau d'échange de chaleur (WA', WA"), pour en effectuer le stockage intermédiaire en commun avec l'eau de refroidissement échauffée (KW'), en tant qu'eau de chauffage (HW).

3. Procédé selon la revendication 2, d'après lequel de la chaleur de l'eau de refroidissement (WR') échauffée lors du refroidissement de recyclage, est transmise à l'eau d'échange de chaleur (WA').

4. Procédé selon la revendication 3, d'après lequel on mesure les températures de l'eau de refroidissement (WR') revenant du refroidissement de recyclage et de l'eau d'échange de chaleur (WA').

5. Procédé selon la revendication 4, d'après lequel la transmission de chaleur à l'eau d'échange de chaleur (WA') n'est autorisée que lorsque l'eau de refroidissement (WR') revenant du refroidissement de recyclage est plus chaude d'au moins 2°C, et notamment d'au moins 5°C, que l'eau d'échange de chaleur (WA').

6. Procédé selon l'une au moins des revendications précédentes, d'après lequel on utilise par ailleurs de l'eau de chauffage (HW') revenant du préchauffage dans l'étape a), pour le refroidissement de correction.

7. Procédé selon la revendication 6, d'après lequel on mesure la température de produit (TP") corrigée dans l'étape b), et on utilise une première fraction de l'eau de chauffage (HW') revenant du préchauffage, en fonction de la température de produit (TP') mesurée, en tant qu'eau de refroidissement (KW) dans l'étape b).

8. Procédé selon la revendication 7, d'après lequel une fraction restante de l'eau de chauffage (HW') revenant du préchauffage, est utilisée en tant qu'eau d'échange de chaleur (WA) pour l'amenée de la chaleur perdue, dans l'étape c).

9. Dispositif pour le chauffage de courte durée d'un produit liquide avant son conditionnement par remplissage, comprenant :
- une unité de préchauffage (3) destinée à préchauffer le produit (P) avant son chauffage ;
- une unité de refroidissement de correction (5) destinée au refroidissement du produit ayant subi le chauffage de courte durée (P'), notamment pour son conditionnement à chaud par remplissage, qui suit ;
- un réservoir tampon (7) destiné au stockage intermédiaire d'eau de refroidissement ayant été échauffée dans l'unité de refroidissement de correction ;
- un circuit d'eau chaude (9) destiné à relier une sortie (7a) du réservoir tampon à l'entrée aller (3a) de l'unité de préchauffage ; et
- un circuit d'échange de chaleur (19) destiné à amener de la chaleur perdue d'une unité de refroidissement de contenants (15) et/ou d'une unité de refroidissement de recyclage (17), au réservoir tampon.

10. Dispositif selon la revendication 9, comprenant, par ailleurs, un système de régalge (20) dans le retour (3b) de l'unité de préchauffage (3) pour relier celui-ci de manière fractionnée à l'unité de refroidissement de correction (5) et au circuit d'échange de chaleur (19).

11. Dispositif selon la revendication 9 ou la revendication 10, comprenant, par ailleurs, une conduite d'échange de chaleur (25) pour la transmission de chaleur perdue en provenance du retour (17a) d'une unité de refroidissement de recyclage (17), vers le circuit d'échange de chaleur (19), notamment à l'aide d'un échangeur de chaleur (24).

12. Dispositif selon la revendication 11, dans lequel le débit à travers la conduite d'échange de chaleur (25) est réglable, notamment en fonction d'une différence de température par rapport au circuit d'échange de chaleur (19).

13. Dispositif selon l'une au moins des revendications 9 à 12, comprenant, par ailleurs, une unité de refroidissement de recyclage (17) à au moins deux étages du côté eau, en vue de pouvoir amener au réservoir tampon, de la chaleur perdue provenant de l'étage (17-1) le plus chaud de l'unité de refroidissement de recyclage, notamment exclusivement de celui-ci.

14. Dispositif selon l'une au moins des revendications 9 à 13, comprenant, par ailleurs, au moins une autre conduite d'échange de chaleur en vue de pouvoir amener au réservoir tampon (7), de la chaleur perdue provenant d'une unité de nettoyage de contenants et/ou d'une salle de brassage.

15. Dispositif selon l'une au moins des revendications 9 à 14, dans lequel il est prévu une ouverture de nettoyage (7d) sur le réservoir tampon (7).
